# EUROPEAN PATENT SPECIFICATION

(11) **EP 2 407 874 B1**
(45) Date of publication and mention of the grant of the patent: **09.04.2014**
(21) Application number: 10187935.1
(22) Date of filing: 18.10.2010
(51) Int. Cl.: G06F 9/44, G06Q 10/00

(54) **Method and apparatus for designating a given file as selected in a computing device**
Verfahren und Vorrichtung zur Bestimmung einer gegebenen Datei als ausgewählte Datei in einer Rechnervorrichtung
Procédé et appareil pour désigner un fichier donné comme étant sélectionné dans un dispositif informatique

(30) Priority: 15.07.2010 US 364475 P
(43) Date of publication of application: 18.01.2012
(73) Proprietor: Research in Motion Corporation, Wilmington, DE 19801 (US)
(72) Inventor: Smirnova, Irina, Andover, Massachusetts 01810 (US)
(74) Representative: MERH-IP Matias Erny Reichl Hoffmann

(56) References cited:
- US-A- 5 764 983
- US-A- 6 047 312
- US-A1- 2005 091 330
- US-A1- 2006 265 458
- David Pogue: "Mac OS X Snow Leopard: The Missing Manual", October 2009 (2009-10), O'Reilly, Sebastopol, CA, USA ISBN: 978-0-596-15328-1 pages 187-188, * the whole document *

## Description

### FIELD

The specification relates generally to computing devices, and specifically to a method and apparatus for designating a given file as selected in a computing device.

### BACKGROUND

Applications in computing devices can be generally configured for selecting files, for example as attachments to messages or the like. US2005/091330A1, for example, discloses a system and method for composing packages of e-mail attachment files for e-mail communications. A plurality of data structures are created, wherein each data structure groups together a plurality of different user application files designated as attachments to an e-mail communication. However D1 requires that application files be designated from within user applications and are associated with selected data structures, such that each designated application file is associated with a selected data structure external to an e-mail application, which is launched after the data structures are created. D. Pogue: Mac OS X Snow Leopard: The Missing Manual, pages 187 - 188 discloses a dialog box that appears when a File-Open option is selected in Mac OS X operating system, specifically, "The new Media Browser is built right into the Open dialog box. That is, you get miniature listings of your iTunes, iPhoto, and movie files right in the Sidebar, for convenience in importing them into (for example) Keynote, PowerPoint or a Web design program." Negotiating a file structure, however, to find a given file can be a waste of computing resources.

### SUMMARY

A first aspect of the specification provides a method for designating a given file as selected in a computing device, the computing device comprising a processing unit interconnected with a memory for storing files, a display device and an input device, the method implementable in the processing unit, the method comprising: providing a list of file types at the display device in response to receiving a first indication that a file is to be selected from the input device, the first indication received within a first application being processed by the processing unit; launching a native application associated with a given file type in response to receiving a second indication that the given file type has been selected from the list, the native application for processing the given file type; and receiving a third indication that the given file has been selected within the native application, thereby designating the given file as selected in the first application.

Launching the native application associated with the given file type can comprise providing a list of files of the given file type.

The method can further comprise the processing the given file in the native application prior to the receiving the third indication.

The method can further comprise generating the given file in the native application prior to the receiving the third indication.

The list of file types can be generated using an API (application programming interface).

The third indication can comprise at least one of: first data indicating that the given file has been clicked on using the input device; and second data indicating that a select file option has been selected within a menu in the native application, the menu provided at the display device, the select file option provided to indicate that the given file can be designated as selected in the first application. The method can further comprise modifying the menu in the native application to include the select file option.

The method can further comprise changing a title of the native application displayed on the display device from a native application title to a custom title. The custom title can be indicative that the native application is being used to designate a file as selected.

The given file type can comprise at least one of a picture file type, a ringtone file type, a video file type, a voice note file type, a multimedia file type, a document file type and a spreadsheet file type and the native application can comprise at least a respective one of a picture application, a ringtone application, a video application, a voice note application, a multimedia application, a document application and a spreadsheet application.

A second aspect of the specification provides a computing device for designating a given file as selected, the computing device comprising: a processing unit interconnected with a memory for storing files, a display device and an input device, the processing unit enabled to: provide a list of file types at the display device in response to receiving a first indication that a file is to be selected from the input device, the first indication received within a first application being processed by the processing unit; launch a native application associated with a given file type in response to receiving a second indication that the given file type has been selected from the list, the native application for processing the given file type; and receive a third indication that the given file has been selected within the native application, thereby designating the given file as selected in the first application.

To launch the native application associated with the given file type, the processing unit can be further enabled to provide a list of files of the given file type.

The processing unit can be further enabled to process the given file in the native application prior to the receiving the third indication.

The processing unit can be further enabled to generate the given file in the native application prior to the receiving the third indication.

The list of file types can be generated using an API (application programming interface).

The third indication can comprise at least one of: first data indicating that the given file has been clicked on using the input device; and second data indicating that a select file option has been selected within a menu in the native application, the menu provided at the display device, the select file option provided to indicate that the given file can be designated as selected in the first application. The processing unit can be further enabled to modify the menu in the native application to include the select file option.

The processing unit can be further enabled to change a title of the native application displayed on the display device from a native application title to a custom title. The custom title can be indicative that the native application is being used to designate a file as selected.

The given file type can comprise at least one of a picture file type, a ringtone file type, a video file type, a voice note file type, a multimedia file type, a document file type, a spreadsheet file type, a presentation and a business tool file type and the native application can comprise at least a respective one of a picture application, a ringtone application, a video application, a voice note application, a multimedia application, a document application, a spreadsheet application, a presentation and a business tool application.

A third aspect of the specification provides a computer program product, comprising a computer usable medium having a computer readable program code adapted to be executed to implement a method for designating a given file as selected in a computing device, the computing device comprising a processing unit interconnected with a memory for storing files, a display device and an input device, the method implementable in the processing unit, the method comprising: providing a list of file types at the display device in response to receiving a first indication that a file is to be selected from the input device, the first indication received within a first application being processed by the processing unit; launching a native application associated with a given file type in response to receiving a second indication that the given file type has been selected from the list, the native application for processing the given file type; and receiving a third indication that the given file has been selected within the native application, thereby designating the given file as selected in the first application.

The present invention is set out in the independent claims.

### BRIEF DESCRIPTIONS OF THE DRAWINGS

Implementations are described with reference to the following figures, in which:

Fig. 1 depicts a block diagram of a computing device, according to non-limiting implementations;
Fig. 2 depicts a block diagram of elements of the computing device of Fig. 1, according to non-limiting implementations;
Fig. 3 depicts a flow chart of a method for designating a given file as selected, according to non-limiting implementations;
Fig. 4 depicts a list of given file types in a graphical user interface (GUI) of an API, according to non-limiting implementations;
Figs. 5 and 6 depict a block diagram of a computing device, according to non-limiting implementations; and
Figs. 7 to 26 depict various views of graphical user interfaces for designating given files types as selected in a first application, using a native application for selection of a given file, according to non-limiting implementations.

### DETAILED DESCRIPTION OF THE IMPLEMENTATIONS

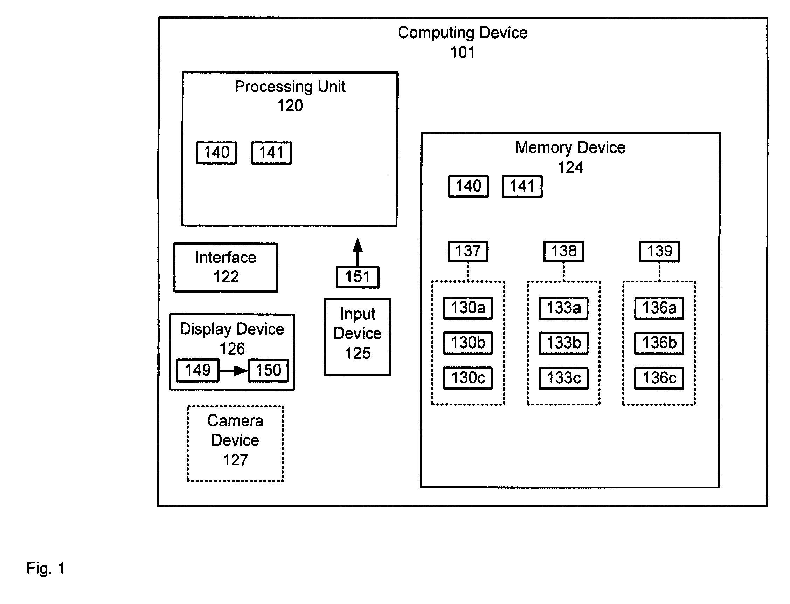

Fig. 1 depicts a computing device 101, according to non-limiting implementations. Computing device 101, which will also be referred to hereafter as device 101, comprises a processing unit 120 interconnected with a communication interface 122, a memory device 124, an input device 125, and a display device 126, for example via a computing bus (not depicted). In some implementations device 101 can also comprise a camera device 127. Memory device 124 stores any suitable number of files 130a-130c, 133a-133c, 136a-136c (collectively files 130, files 133, and/or files 136, and generically a file 130, a file 133 and/or a file 136). Each file 130 is associated with an application 137, each file 133 is associated with an application 138, and each file 136 is associated with an application 139, each application 137, 138, 139 stored in memory 124 (or a different memory, as desired). It is appreciated that while three application 137, 138, 139 are stored memory 124 in depicted implementations, in other implementations, memory 124 can store any suitable number of applications. Further, it is appreciated that while three of each of files 130, 133, 136 are stored memory 124 in depicted implementations, in other implementations, memory 124 can store any suitable number of files 130, 133, 136, and/or any suitable number of files associated with each application.

It is yet further appreciated that each application 137, 138, 139 comprises a native application for processing and/or generating associated files 130, 133, 136. For example, in some implementations, files 130 can comprise picture files and application 137 can comprise a picture application for viewing and/or generating pictures (including but not limited to a camera application). Similarly, files 133 can comprise music files and application 138 can comprise a music application for playing music files. Furthermore, files 136 can comprise video files and application 139 can comprise a video application for playing and/or generating video files (including but not limited to a video camera application). Hence, each group of files 130, 133, 136 comprises files of a given file type associated with a native application for processing a given file type.

In some implementations, non limiting given files types stored in memory 124 can comprise at least one of a picture file type, a ringtone file type, a video file type, a voice note file type, a multimedia file type, a document file type, a spreadsheet file type, a presentation and a business tool file type and the associated native applications can comprise at least a respective one of a picture application, a ringtone application, a video application, a voice note application, a multimedia application, a document application, a spreadsheet application, a presentation and a business tool application.

Device 101 can further comprise an application 140 where selection of a file 130, 133, 136 can be triggered. For example, in some implementations, application 140 can comprise a messaging application, including but not limited to an e-mail application, an SMS (short message service) application, an MMS (multimedia message service) application, or the like; in these implementations, a file 130, 133, 136 can be attached to a message generated by application 140. However, it is appreciated that application 140 is not limited to messaging applications and any suitable applications where file selection is desired is within the scope of present implementations.

Device 101 can further comprise an application 141 for designating a given file as selected, for example one or more of files 130, 133, 136, as will be described below.

In general, device 101 comprises any suitable electronic device for processing applications 137-141, including but not limited to any suitable combination of computing devices, desktop computing devices, laptop computing devices, portable computing device, mobile electronic devices, PDAs (personal digital assistants), cellphones, smartphones and the like. Other suitable electronic devices are within the scope of present implementations.

Processing unit 120 comprises any suitable processor, or combination of processors, including but not limited to a microprocessor, a central processing unit (CPU) and the like. Other suitable processing units are within the scope of present implementations. It is appreciated that processing unit 120 is enabled to retrieve files 130, 133, 136 and/or application 137-141 from memory device 124 for processing.

Communication interface 122 comprises any suitable communication interface, or combination of communication interfaces. In particular communication interface 122 is enabled to communicate with via a network (not depicted), the network being wired and/or wireless as desired. Accordingly, communication interface 122 (which will also be referred to as interface 122 hereafter) is enabled to communicate according to any suitable protocol which is compatible with the network, including but not limited to wired protocols, USB (universal serial bus) protocols, serial cable protocols, wireless protocols, cell-phone protocols, wireless data protocols, Bluetooth protocols, NFC (near field communication) protocols and/or a combination, or the like. In some implementations, interface 122 can be enabled to communicate with remote computing devices (e.g. servers, other computing devices, other mobile electronic devices, etc.), via any suitable communication network according to any suitable protocol, including but not limited to packet based protocols, Internet protocols, analog protocols, PSTN (public switched telephone network) protocols, WiFi protocols, WiMax protocols and the like, and/or a combination. Other suitable communication interfaces and/or protocols are within the scope of present implementations.

Input device 125 is generally enabled to receive input data, and can comprise any suitable combination of input devices, including but not limited to a keyboard, a keypad, a pointing device, a mouse, a track wheel, a trackball, a touchpad, a trackpad, a touch screen and the like. Other suitable input devices are within the scope of present implementations.

Memory device 124 can comprise any suitable memory device, including but not limited to any suitable one of, or combination of, volatile memory, non-volatile memory, random access memory (RAM), read-only memory (ROM), hard drive, optical drive, flash memory, magnetic computer storage devices (e.g hard disks, floppy disks, and magnetic tape), optical discs, removable memory, and the like. Other suitable memory devices are within the scope of present implementations. In particular, memory device 124 is enabled to store files 130, 133, 136, and applications 137-141.

Display device 126 comprises circuitry 149 for generating representations of data, for example a representation 150 of at least one of files 130, 133, 136, and applications 137-141, as will be described below. Display device 126 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 149 can include any suitable combination of circuitry for controlling the CRT and/or flat panel displays etc., including but not limited to display buffers, transistors, electron beam controllers, LCD cells, plasmas cells, phosphors etc. In particular, display device 126 and circuitry 149 can be controlled by processing unit 120 to generate representation 150.

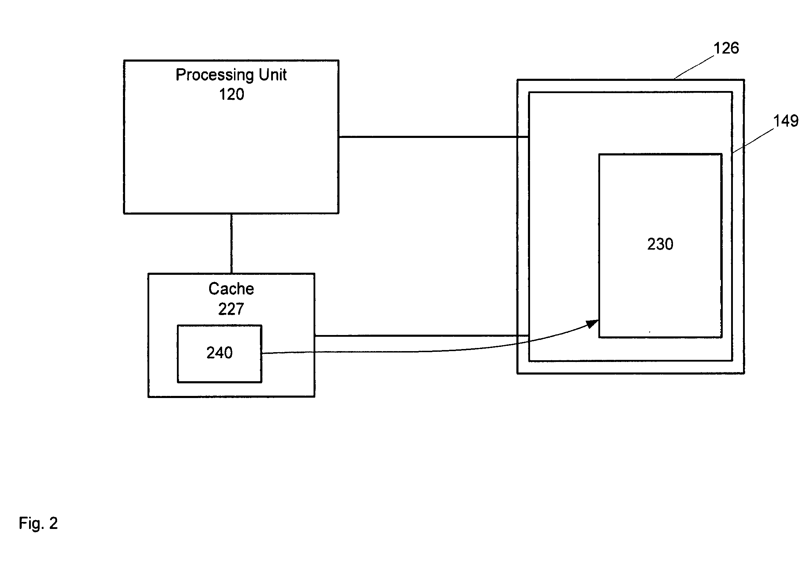

In particular, attention is directed to Fig. 2 which depicts non-limiting implementations of display device 126 and circuitry 149, in communication with processing unit 120 and a memory cache 227 (hereinafter cache 227). In some implementations, memory device 124 can comprise cache 227, while in other implementations cache 227 can comprise a separate memory device. Furthermore, processing unit 120 is in communication with cache 227 and further enabled to control circuitry 149. In particular, processing unit is enabled to control an area 230 of circuitry 149 to provide representation 150. Data 240 is stored in cache 227, data 240 comprising data for controlling area 240 to provide representation 150; when representation 150 is to be provided at display 126, data 240 is transferred to display 126 to control circuitry 230.

In implementations depicted in Fig. 2, it is appreciated that circuitry 149 and area 230 comprises, for example, transistors in a flat panel display; however, in other implementations, circuitry 149 can comprise a combination of an electron gun in a CRT, and area 230 can comprise phosphors in a CRT.

Camera device 127 can comprise any suitable camera device induding, but not limited to, a CCD (charge-coupled device) camera device.

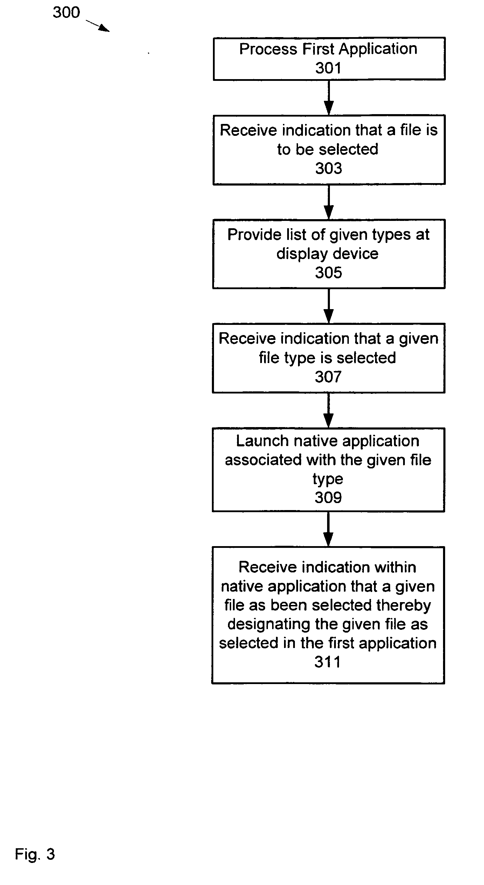

Attention is now directed to Fig. 3 which depicts a method 300 for designating a given file as selected In order to assist in the explanation of method 300, it will be assumed that method 300 is performed using device 101. Furthermore, the following discussion of method 300 will lead to a further understanding of device 101 and its various components. However, it is to be understood that device 101 and/or method 300 can be varied, and need not work exactly as discussed herein in conjunction with each other, and that such variations are within the scope of present implementations.

At 301, application 140 is processed by processing unit 120, as depicted in Fig. 1. For example, a messaging application, or any other suitable application, is launched at device 101 and displayed at display device 126, for example within representation 150.

At 303, an indication 151 that a file is to be selected is received from input device 150 for processing by processing unit 120, as depicted in Fig. 1. For example, within application 140, a "select file" option can be selected from any suitable menu or the like such that indication 151 is received within application 140.

At 305, in response to receiving indication 151, a file selection menu 401 is provide at display device 126 in response to receiving indication 151 at 303. It is also appreciated in Fig. 1 that application 141 has been launched in order to provide file selection menu 401.

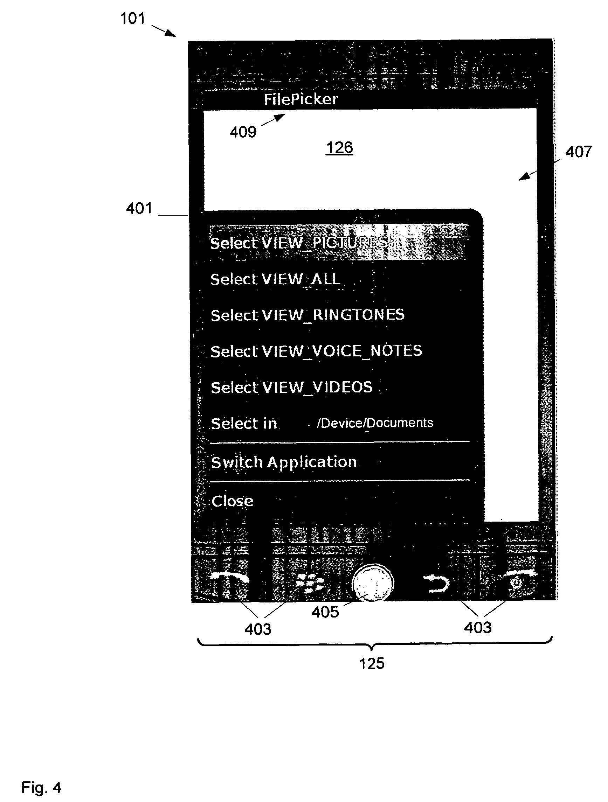

Non-limiting implementations of file selection menu 401 are depicted in Fig. 4, which depicts a front view of non-limiting implementations of device 101, showing display device 126 and input device 125, input device 125 comprising a plurality of buttons 403 and a trackball 405. In general, it is appreciated that file selection menu 401 comprises a list of file types (e.g. "PICTURES", RINGTONES", "VOICE_NOTES", "VIDEOS"). It is further appreciated that display device 126 is being controlled to provide file selection menu 401 within a representation 407 of application 141 (for example representation 150 comprising representation 407). In depicted implementations, representation 407 of application 141 comprises a titlebar 409 in which application 141 is referred to as "FilePicker".

It is yet further appreciated that file selection menu 401 comprises a list of file types, with each line in file selection menu 401 comprising an option to select at least a respective file type. For example, line "Select VIEW_PICTURES" comprises an option to select picture files; similarly, line "Select VIEW_RINGTONES" comprises an option to select ringtone files, line "Select VIEW_VOICENOTES" comprises an option to select voicenote files, and line "Select VIEW_VIDEOS" comprises an option to select video files. However, line "Select VIEW_ALL" comprises an option to select any file type, as will be described below. Further, line "Select in /Device/Documents" comprises an option to select files from a given data folder (e.g. folder /Device/Documents), and/or browse through a file structure, in memory device 124 (or any other suitable memory device). Line "Switch Application" comprises an option to switch to a different application being processed at device 101 (e.g. when another application other than application 140 is being processed at device 101). Line "Close" comprises an option to close file selection menu 401 and return to application 140 without selecting a file.

It is appreciated, that the number of lines and/or options provided in file selection menu 401 is generally non-limiting, though in some implementations, file selection menu 401 can comprise options for selecting each of type of file 130, 133, 136: in depicted non-limiting implementations, options for selecting four different file types are provided.

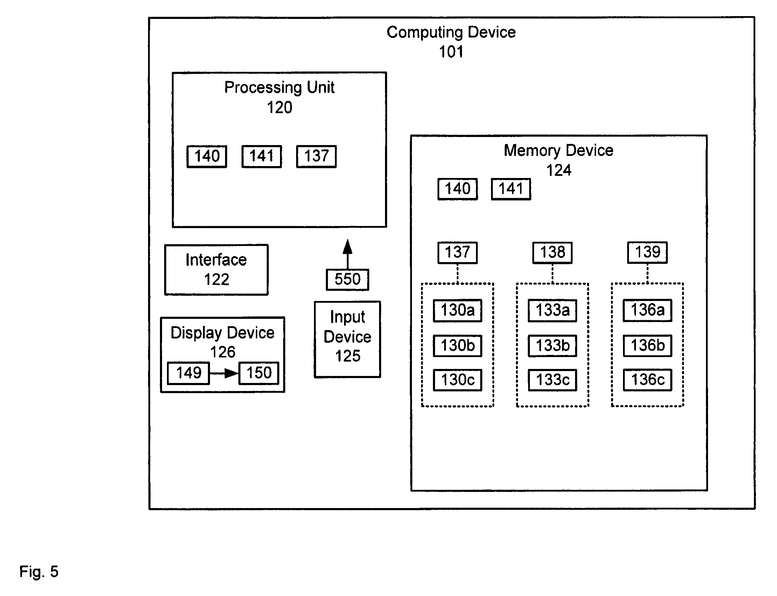

In any event, in non-limiting implementations depicted in Fig. 4, it is appreciated that input device 125 has been used to select line "Select VIEW_PICTURES" (i.e. a picture file type is selected). For example, as depicted in Fig. 5, an indication 550 is received from input device 125 indicating that a given file type has been selected Fig. 5 is generally similar to Fig. 1, with like elements having like numbers.

Returning to Fig. 3, and continuing with a description of method 300, at 307, indication 550 is received, indicating that a given file type has been selected in file selection menu 401.

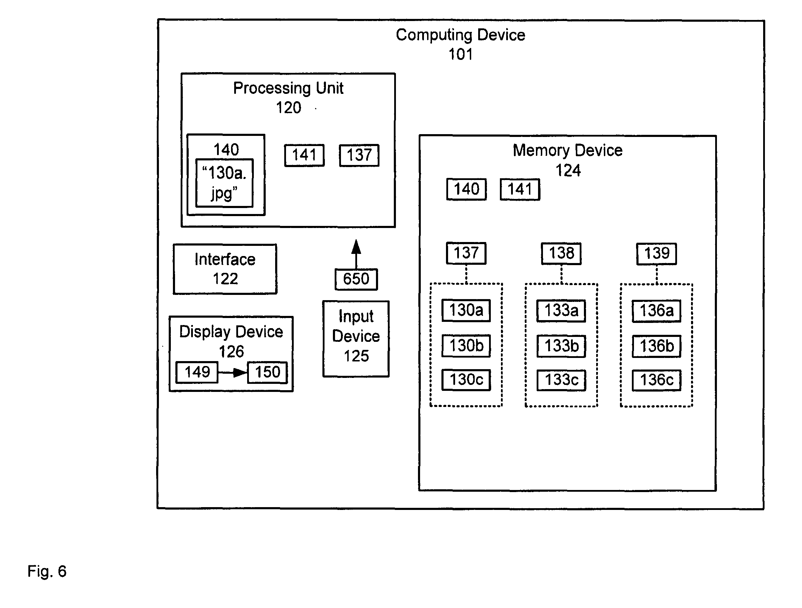

At 309, a native application associated with the given file type selected at 307 is launched, and at 311, an indication 650 (as depicted in Fig. 6, described below) is received indicative that a given file has been selected within the native application, thereby designating the given file as selected in application 140. For example, as depicted in Fig. 6, indication 650 is received via input device 125, indicating that file 130a has been selected in application 137, thereby designating file 130a as selected in application 140, as indicated in Fig. 6 by file identifier "130a.jpg" in application 140. However, it is appreciated that any suitable data can be stored and/or processed at device 101 to indicate that the given file has been designated as selected. Further any suitable method for indicating that the given file has been designated as selected is within the scope of present implementations, including but not limited an indicator and/or a pointer (not depicted) stored in memory device 124.

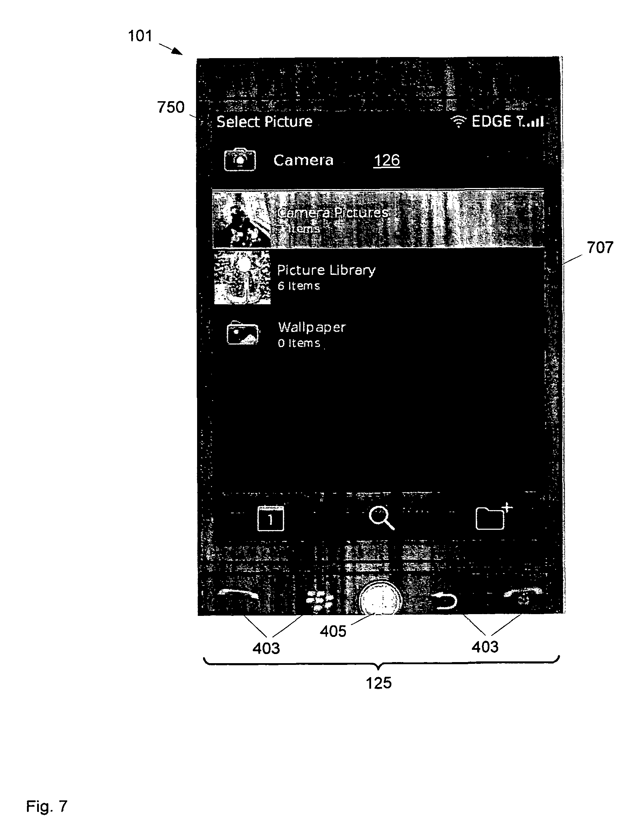

For example, assuming that application 137 comprises a picture file application, application 137 is launched, as depicted in Figs. 5 to 7. Fig. 7 is similar to Fig. 4, with like elements having like numbers, however in Fig. 7, application 137 has been launched and a representation 707 of application 137 is provided at display device 126, representation 150 comprising representation 707. It is appreciated that in depicted implementations, representation 707 comprises various non-limiting options within application 137 for viewing, acquiring and/or selecting files. For example representation 707 an option "Camera" for launching a camera application for using camera device 127 at device 101, such that camera files (e.g. image files and/or picture files acquired using camera device 127) can be acquired. Representation 707 further comprises an option "Camera Pictures" for providing the camera files at display device 126. Representation 707 further comprises an option "Picture Library" for providing picture files and/or image files stored at device 101, at display device 126. Representation 707 further comprises an option "Wallpaper" for providing wallpaper files and/or image files stored at device 101, at display device 126.

Hence, in general application 137 can be navigated, independent of application 140, in order to view and/or generate pictures: in other words, while application 137 is launched in order to designate a given file as selected in application 140, application 137 can be used as a native application independent of application 140 prior to designating a given file as selected in application 140.

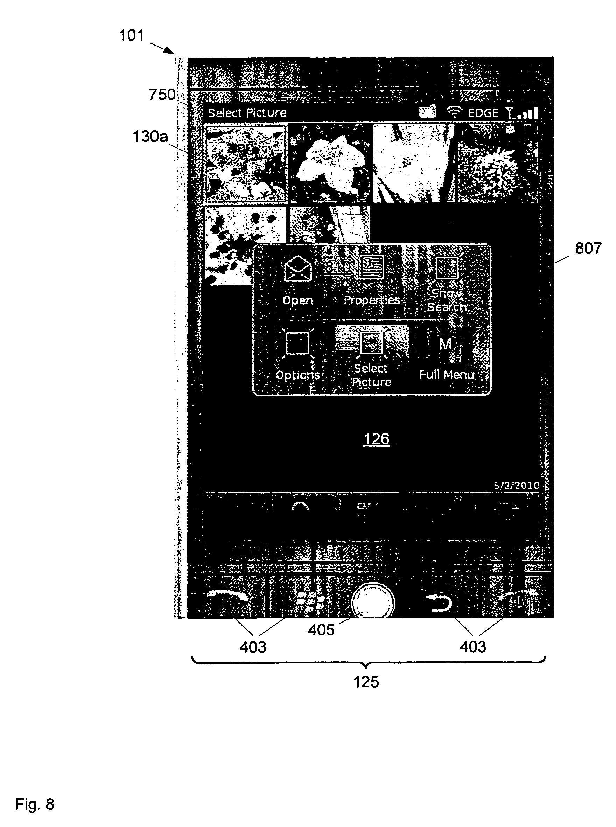

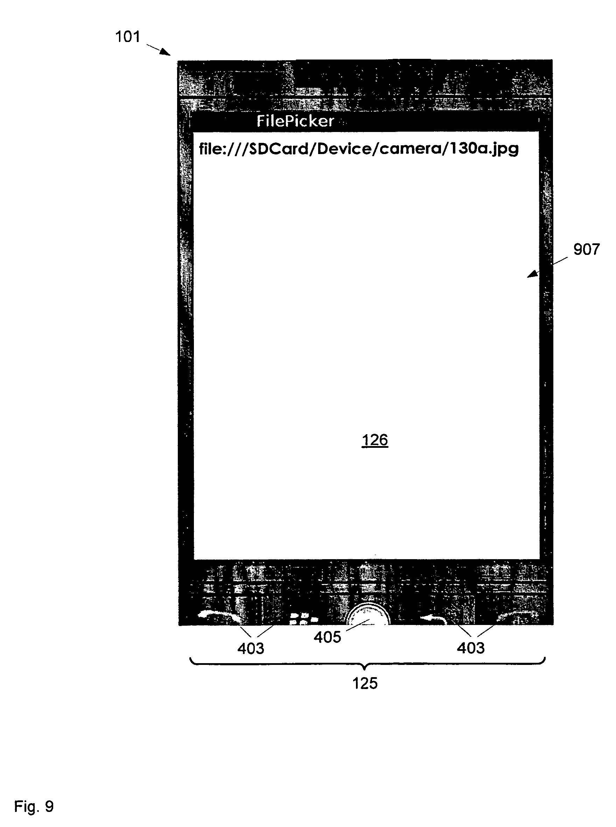

It is appreciated from Fig. 7 that the option "Camera Pictures" has been selected, which results in display device 126 being controlled to provide representation 807 as depicted in Fig. 8. Fig. 8 is substantially similar to Fig. 7, with like elements having like numbers. Representation 807 comprises a list of files of a given file type associated with native application 137. In representation 807, the list of files associated with application 137 is provided by representations of camera files, which can include a representation of file 130a, for example (and/or any other suitable picture files). In any event, file 130a can be designated as selected either by receiving input data indicative that a given file has been clicked-on using input device 125. Alternatively, as depicted, file 130a can be designated as selected by receiving input data indicating that a select file option (e.g. as depicted a "Select Picture" option) has been selected within a menu 810 in native application 137, menu 810 provided at display device 126, the select file option provided to indicate that a given file can be designated as selected in application 140. For example, it is appreciated in Fig. 8 that file 130a has been selected and menu 810 has been generated in response (e.g. by right clicking on file 130a and/or by using any suitable button 403 and/or trackball 405); it is further appreciated that the "Select Picture" option has been selected. Once the "Select Picture" option has been selected, device 101 exits native application 137 and returns to application 140 where file 130a has been designated as selected (for example attached to a message). Alternatively, an interim representation 907 can be provided, as depicted in Fig. 9 (substantially similar to Fig. 8, with like elements having like numbers), where the location of file 130a in a file structure of device 101 is provided along with an identifier of file 130a e.g. file "130a.jpg" is located at "file:///SDCard/Device/camera/130a.jpg" in device 101.

It is appreciated, however, that prior to designating file 130a as selected, native application 137, file 130a can be processed in native application 137, for example prior to to receiving indication 650. For example, in menu 810 the option "Open" can be selected in order to open file 130a. Further, at least one of options "Properties" and "Options" can be selected to generate, respectively, data indicative of properties of file 130a (e.g. file size, data created, or the like) and options available for processing file 130a. Alternatively, an option "Show Search" can be selected for searching for files and/or an option "Full Menu" can be selected for triggering device 101 to provide a full default menu (e.g. a menu that provides suitable options and/or application stored at device 101 to be selected and/or launched).

Returning to Fig. 7, it is appreciated that when option "Camera" is selected, a camera menu (not depicted) is provided in order to operate camera device 127, such that camera device 127 can be used to generate picture files. In some implementations, camera device 127 can be used to generate file 130a prior to file 130a being selected: for example, once file 130a is generated, file 130a can be selected using the camera menu and/or representation 707 can provided again for navigation to menu 810 of Fig. 8. Hence, a given file can be generated in a native application prior to being designated as selected.

Furthermore, it is appreciated that native application 137 (and/or native application 138 and/or native application 139) can be launched independent of applications 140, 141 such that files 130 (and/or files 133 and/or files 136) processed. Menu 810 can also be accessible in these cases with, however the option "Select Picture" being excluded. Indeed, menu 801 can comprise a menu in native application 137 that as been modified to include a select file option.

Similarly, with reference to Figs 7 and 8, a title 750 of native application 137 displayed on display device 126 can be changed from a native application title to a custom title. For example, when native application 137 is launched independent of applications 140, 141, an identifier of native application 137 can be provided in a titlebar (e.g. a native application title such as "Picture Application" or the like). However, when native application 137 is launched using file selection menu 401, the native application title can be changed to custom text indicating that native application 137 is being used to designate a given file as selected for application 140, such as "Select Picture" as depicted.

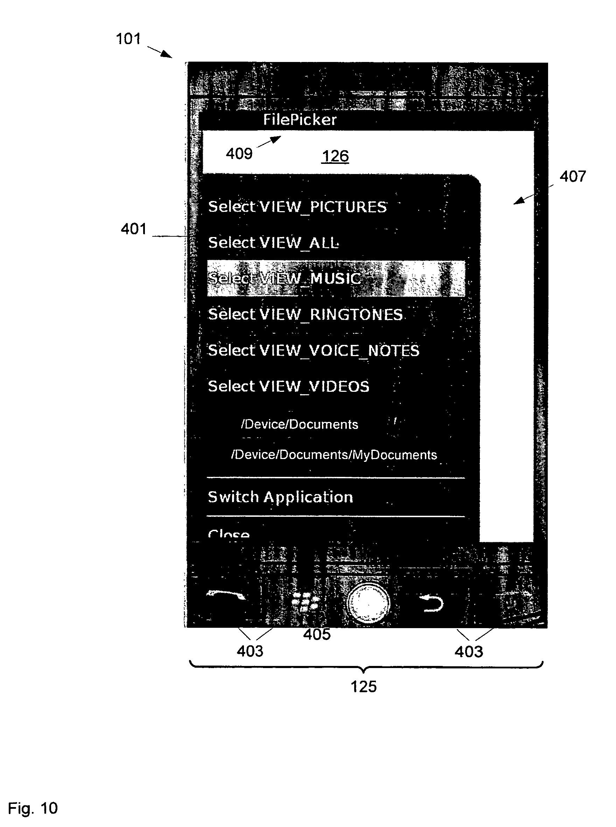

Attention is now directed to Fig. 10, which is substantially similar to Fig. 4, with like elements having like numbers, however in Fig. 10 the option "Select VIEW_MUSIC" has been selected. In addition, options "/Device/Documents" and "/Device/Documents/MyDocuments" are provided which, when selected, erable device 101 to provide identifiers of files stored in the respective locations.

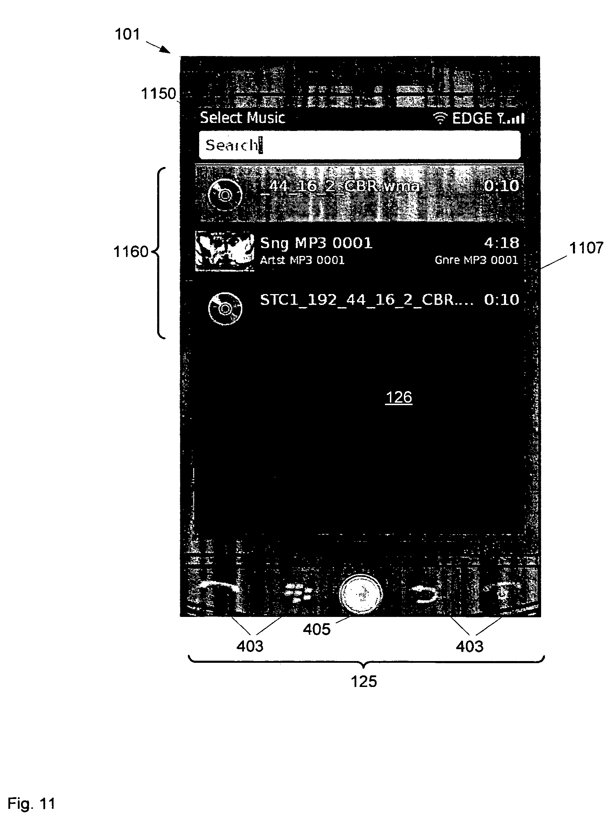

In any event, when the option "Select VIEW_MUSIC" has been selected, a native application associated with playing and/or generating music files is launched as in Fig. 11 where a representation 1107 of a native music application is provided on display device 126, a title 1150 of the native music application changed to custom text indicating that the native music application is being used to designate a given file as selected for application 140. Further, a list 1160 of music files is provided as well as an option "Search" in which text can be received in order to search the music files. While only three music files are depicted in list 1160, the number of music files is generally appreciated to be non-limiting. Further, the options depicted and the format of representation 1107 is appreciated to be merely exemplary of a native music application and that any suitable music application is within the scope of present implementations.

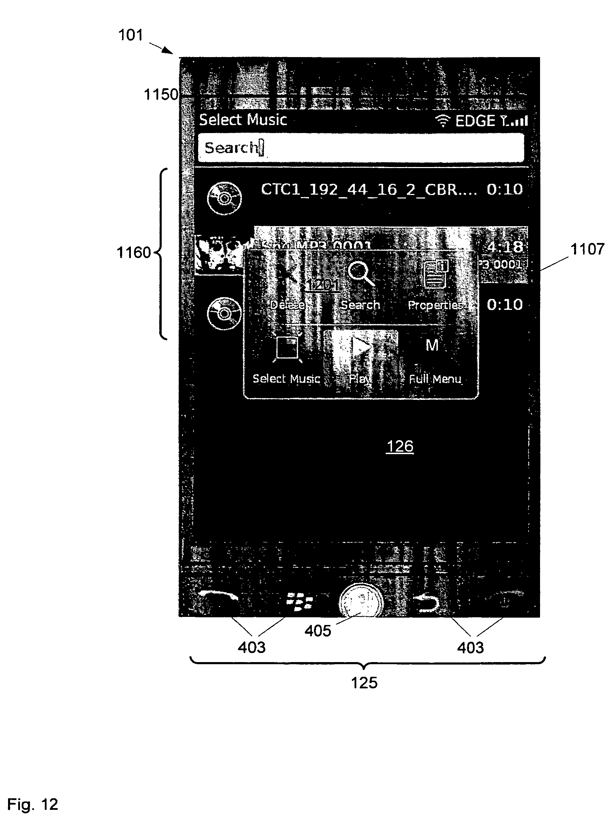

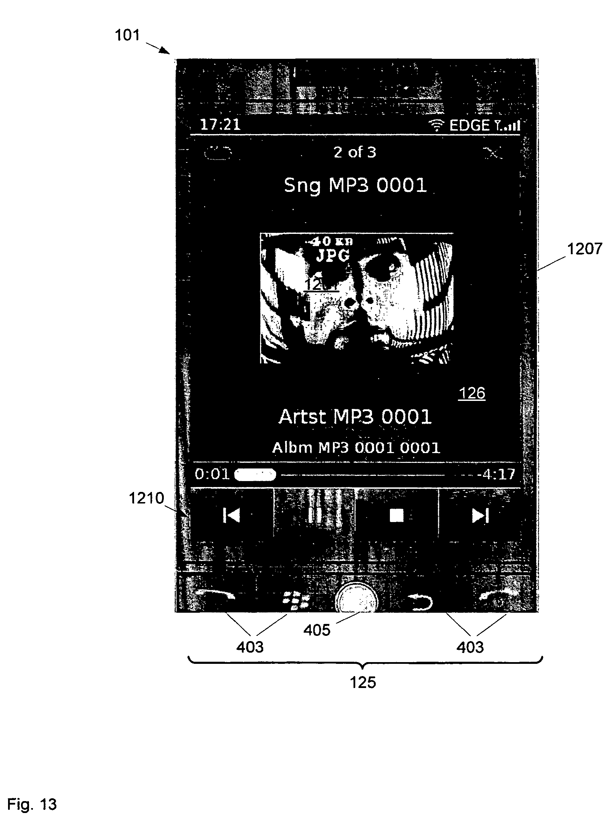

As depicted in Fig. 12, substantially similar to Fig. 11 with like elements having like numbers, one of the music files can be selected (e.g the second from the top) and a menu 1201 can be provided, similar to menu 801, with options for playing ("Play") a music file, deleting ("Delete") an music file etc., menu 1201 comprising a menu in the native music application modified to include a select file option ("Select Music") such that a music file can be designated as selected in application 140. However, as depicted, the "Play" option is selected such that a selected music file can be played prior to being designated as selected in application 140: e.g. the selected music file is depicted as being played in Fig. 13 in a representation 1207, with controls 1210 for controlling play of the selected music file. From representation 1207, representation 1107 can be regenerated at display device 126 and the "Select Music" option selected and/or another music file can be selected, played and/or designated as selected in application 140. In other words, the features of the native music application can be used when the native music application is launched via file selection menu 410 prior to designating a music file as selected.

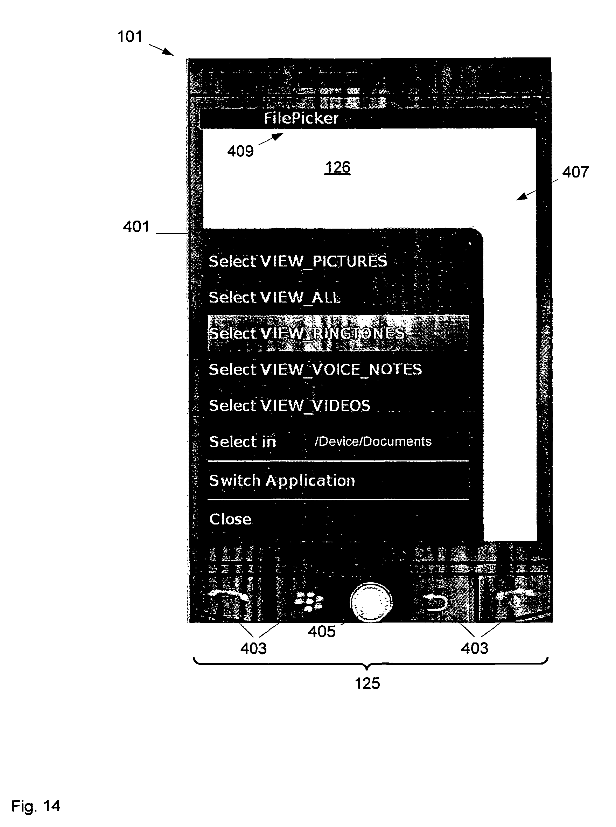

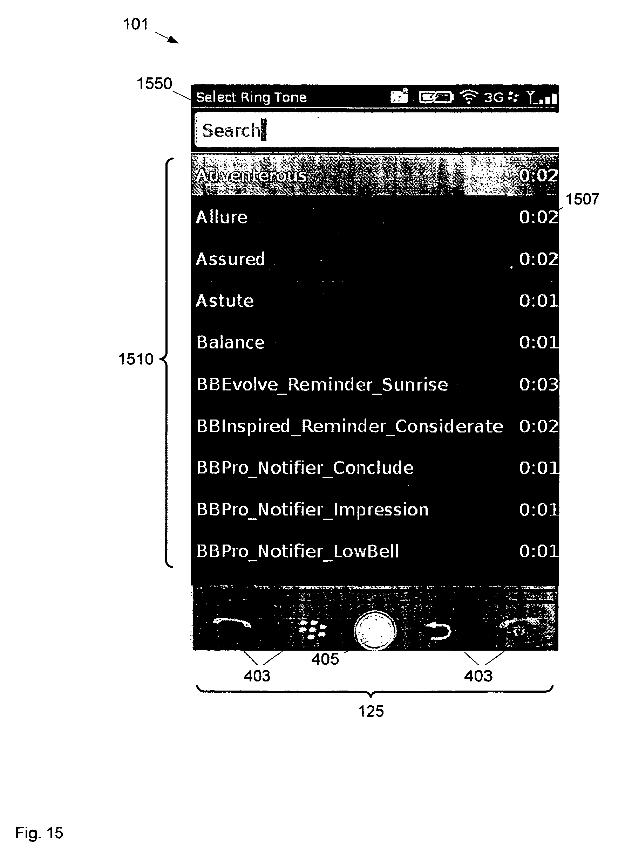

Similarly, attention is directed to Fig. 14, which is substantially similar to Fig. 4 with like elements having like numbers, except that the option "Select VIEW_RINGTONES" has been selected which causes display device 126 to be controlled to provide a representation 1507 of a native ringtone application as depicted in Fig. 15 which provides a list 1510 of identifiers of ringtone files such that ringtones can be selected and played etc. in the native ringtone application prior to being designated as selected in application 140. Further, title 1550 indicates that the native ringtone application is being used to designate a given file as selected in application 140. While a menu for selecting a ringtone file is not depicted is it appreciated that a given ringtone file can be designated as selected either by clicking on a given identifier of a ringtone file in Fig. 15 and/or via a menu similar to menus 801, 1201 or the like.

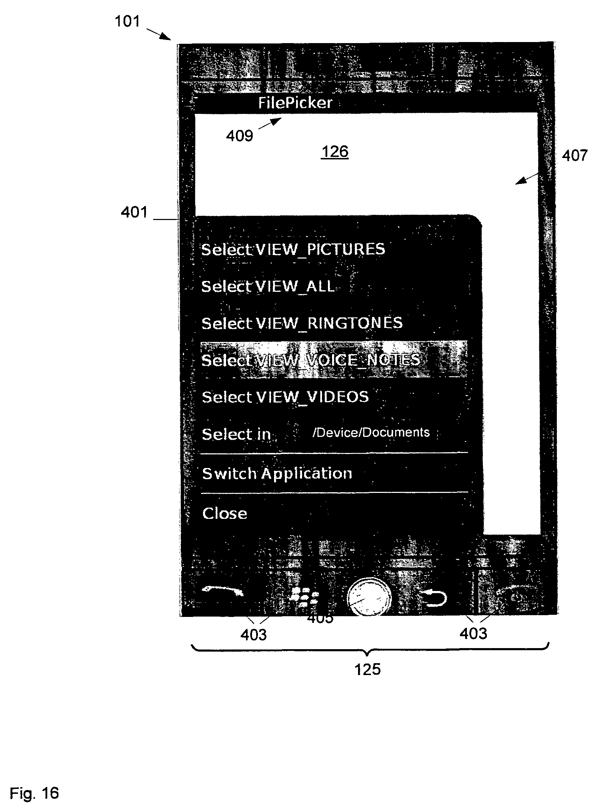

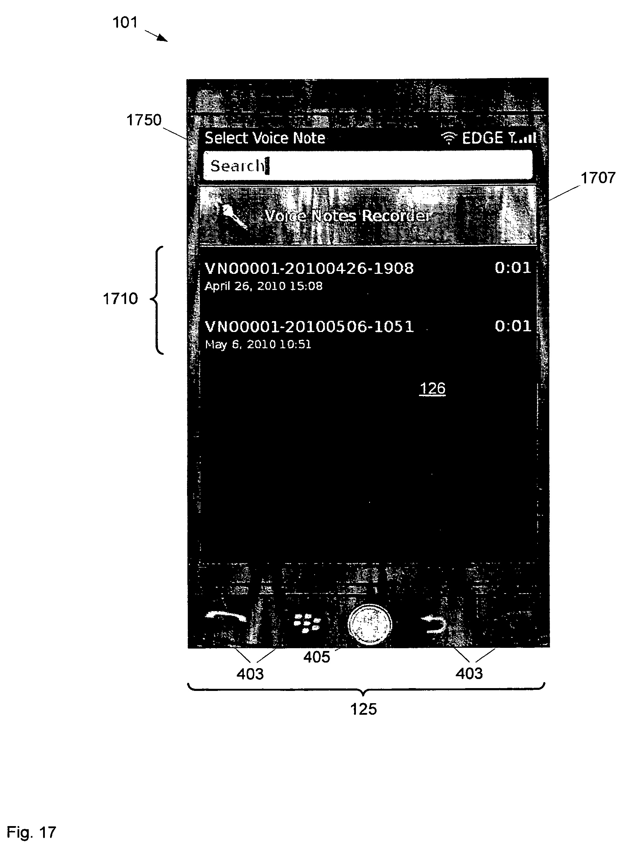

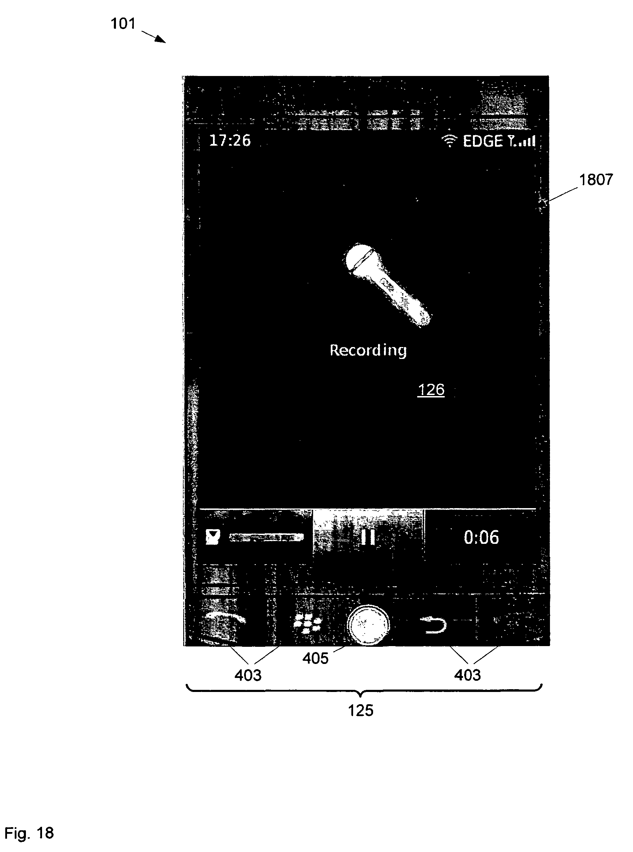

Attention is now directed to Fig. 16, which is substantially similar to Fig. 14 with like elements having like numbers, except that the option "Select VIEW_VOICE_NOTES" has been selected which causes display device 126 to be controlled to provide a representation 1707 of a native voice note application as depicted in Fig. 17 which provides a list 1710 of identifiers of voice note files such that voice notes can be selected, played and/or generated etc. in the native voice note application prior to being designated as selected in application 140. For example, Fig. 18 (similar to Fig. 17 with like elements having like numbers) depicts a representation 1807 of a voice notes recorder launched when the "Voice Notes Recorder" option is selected in representation 1707 such that a new voice note file can be generated and saved for selection. Further, title 1750 indicates that the native voice note application is being used to designate a given file as selected in application 140. While a menu for selecting a voice note file is not depicted is it appreciated that a given voice note file can be designated as selected either by clicking on a given identifier of a voice note file in Fig. 17 and/or via a menu similar to menus 801, 1201 or the like.

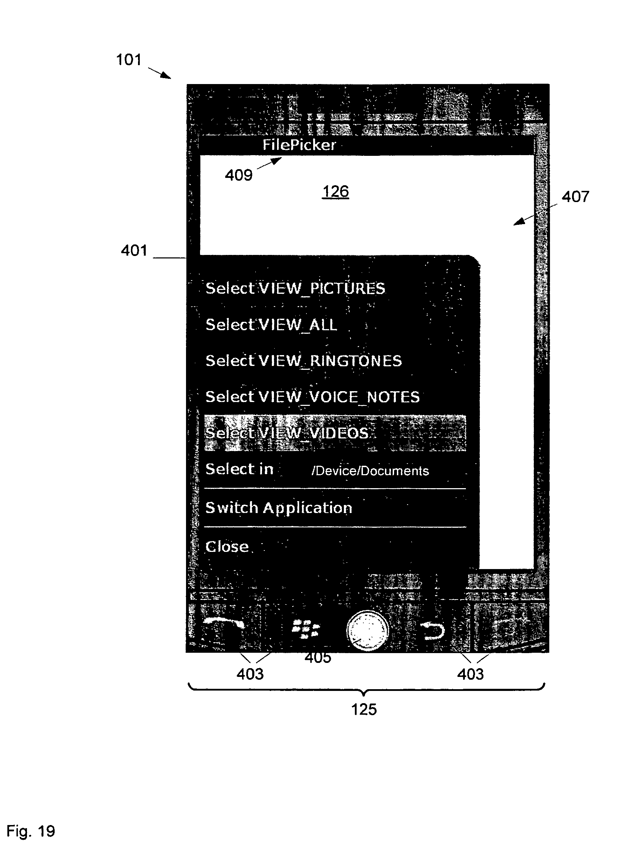

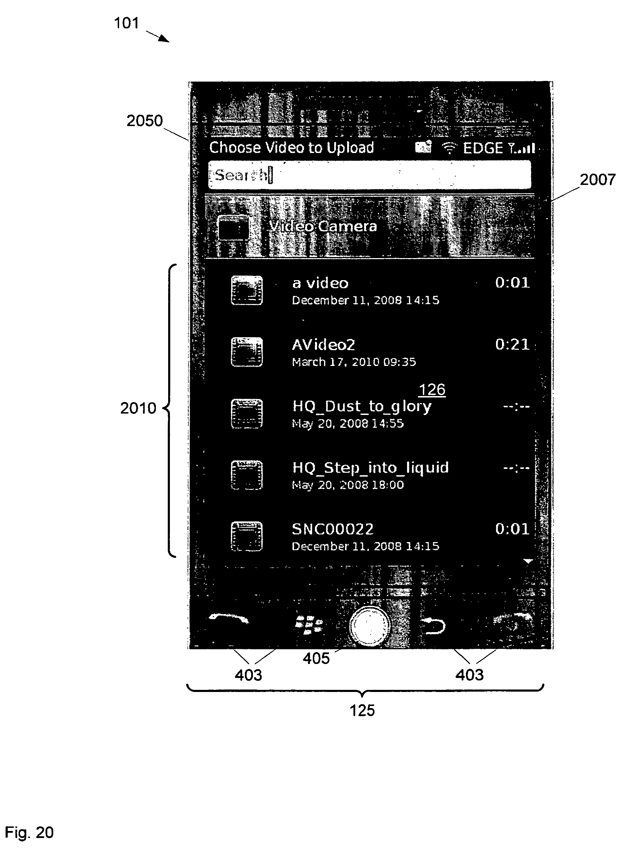

Attention is now directed to Fig. 19, which is substantially similar to Fig. 14 with like elements having like numbers, except that the option "Select VIEW_VIDEOS" has been selected which causes display device 126 to be controlled to provide a representation 2007 of a native voice note application as depicted in Fig. 20 which provides a list 2010 of identifiers of video files such that videos can be selected, played and/or generated etc. in the native video application prior to being designated as selected in application 140. Further a video file can first be generated by selection of option "Video Camera" which causes a video camera recorder to be launched (not depicted) for recording videos. Further, title 2050 indicates that the native video application is being used to designate a given file as selected in application 140. While a menu for selecting a video file is not depicted is it appreciated that a given video file can be designated as selected either by clicking on a given identifier of a video file in Fig. 20 and/or via a menu similar to menus 801, 1201 or the like.

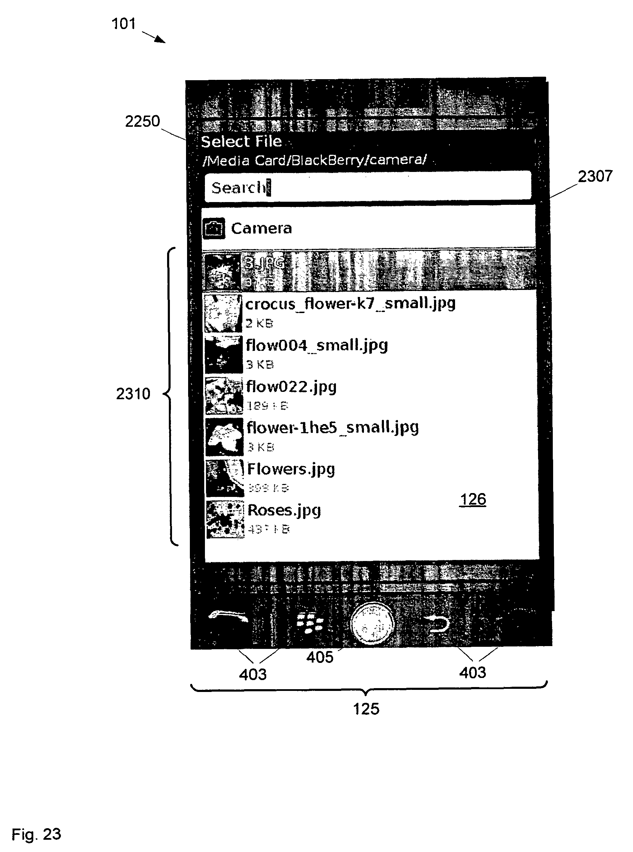

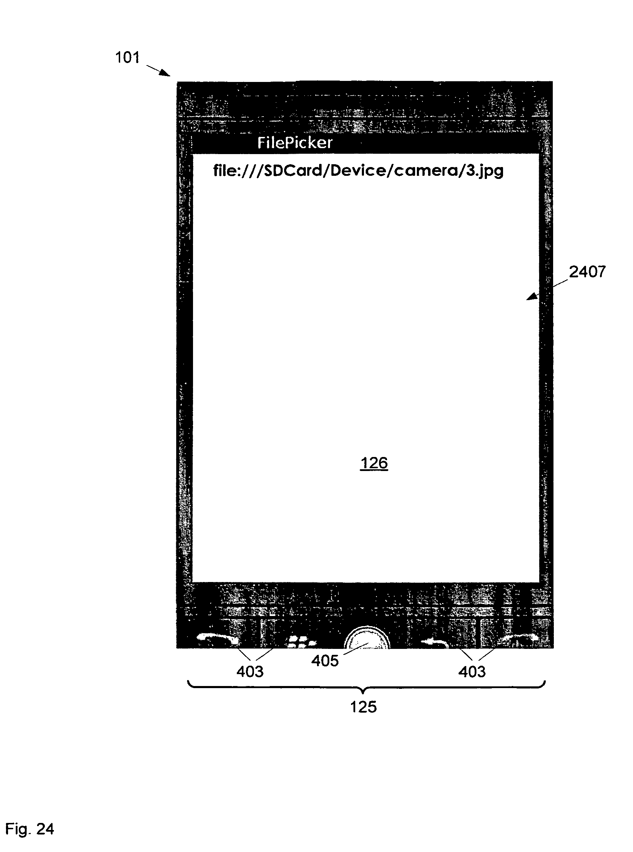

Attention is now directed to Fig. 19, which is substantially similar to Fig. 14 with like elements having like numbers, except that the option "Select VIEW_ALL" has been selected which causes display device 126 to be controlled to provide a representation 2207 for navigating a file selection application as depicted in Fig. 20 which provides a list 2010 of memory devices on which files can be stored, for example memory device 124: as depicted two memory devices are available for navigation, "Media Card" and "Device Memory". Further a title 2250 indicates that a file is to be designated as selected in "Media Card" is selected in depicted implementations, which causes processing unit 120 to control display device 126 to provide a list 2310 of files stored on a media card (e.g. a removable memory), as depicted in Fig. 23, such that a given file can be designated as selected in application 140. As depicted, file "3.jpfg" is has been designated as selected, either by clicking on the identifier "3.jpg" and/orvia a menu (not depicted) similar to menus 801, 1201 or the like. Prior to returning to application 140, a representation 2407, as depicted in Fig. 24, is provided indicating the location of the given file designated as selected in application 140 (i.e. "file:///SDCard/Device/camera/3.jpg").

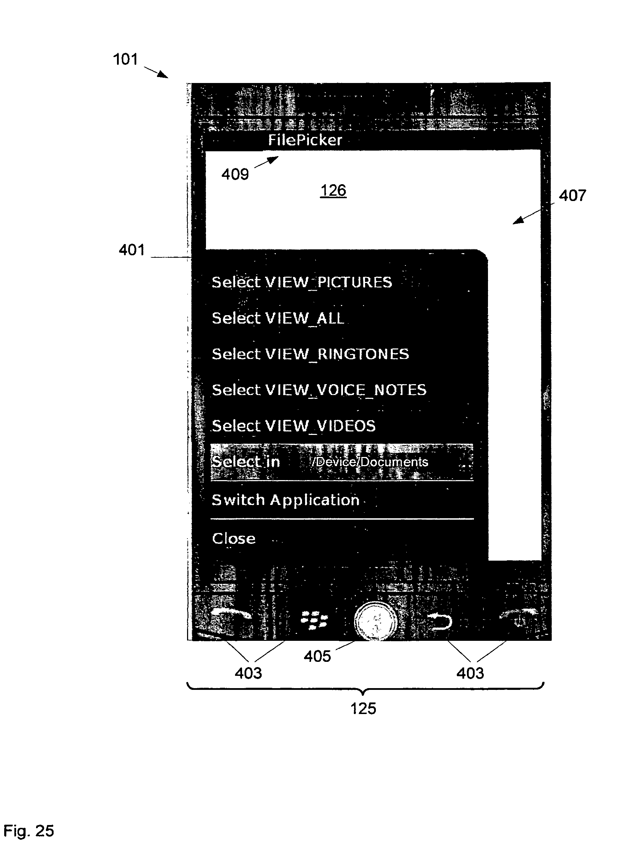

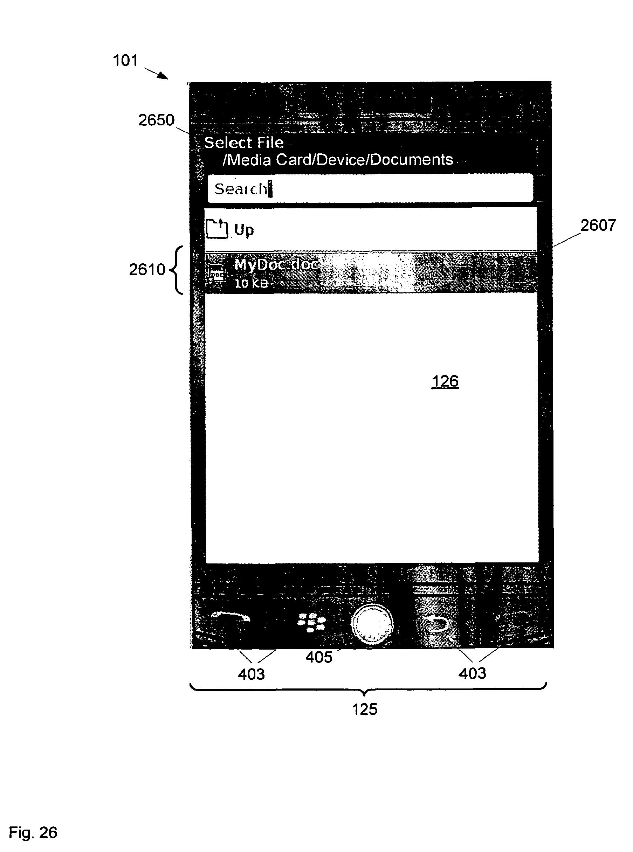

Attention is now directed to Fig. 25, which is substantially similar to Fig. 14 with like elements having like numbers, except that the option "Select in /Device/Documents" has been selected which causes display device 126 to be controlled to provide a representation 2607 of a given directory as depicted in Fig. 26, which provides a list 2610 files located at a given directory in memory device 124, for example "/Media Card/Device/Documents". The given directory can be preconfigured and/or predetermined and can further be configurable, for example via a menu option (not depicted). Further a title 2650 indicates that a file is to be designated as selected in the given directory. As depicted, file "MyDoc.doc" is has been designated as selected, either by clicking on the identifier "MyDoc.doc" and/or via a menu (not depicted) similar to menus 801, 1201 or the like. Alternatively, a menu structure can be navigated by an option "Up" which causes identifiers of files in a path "/Media Card/Device" to be provided (not depicted). Alternatively, a file structure can be searched via a "Search" option.

In some implementations application 141 comprises an API (application programming interface) such that file selection menu 401 is generated using the API. It is further appreciated that application 141 provides context sensitive interfaces based on what type of file is to be designated as selected in application 140.

In some non-limiting implementations, the following java code can be used to provide the API:

```
 /*
 * FilePicker sample
 package com.company.tests.files.FilePickerSample;
 import net.company.device.api.ui.menuItem;
 import net.company.device.api.ui.Field;
 import net.company.device.api.ui.component.LabelField;
 import net.company.device.api.ui.component.RichTextField;
 import net.company.device.api.ui.component.Menu;
 import net.company.device.api.ui.picker.FilePick.er;
 import net.company.device.api.ui.UiApplication;
 import net.company.device.api.ui.container.MainScreen;
 /**
 *FilePicker sample
 */
 class FilePickerSample extends UiApplication implements FilePicker.Listener {
   MyScreen _screen;
    FilePickerSample() {
      _screen = new MyScreen("Testing FilePicker", this);
      pushScreen(_screen) ;
   }
   public void selectiondone( String selected) {
       System.out.println(selected);
       _screen.resultField.setText(selected);
   }
   public static void main(String[] args) {
         FilePickerSample instance = new FilePickerSample();
         instance.enterEventDispatcher();
   }
   }
   final class MyScreen extends MainScreen
   {
   public RichTextField resultField;
   FilePicker.Listener _listener;
   MyScreen(String text, FilePicker.Listener listener) {
       LabelField title = new LabelField(text , LabelField.ELLIPSIS |
       LabelField.USE_ALL_WIDTH);
       setTitle(title);
       resultField = new RichTextField("" ,Field.NON_FOCUSABLE);
       add(resultField);
       _listener = listener;
   }
    protected void makeMenu(Menu menu, int instance) {
       menu.addSeparator();
       menu.add( new MenuItem("SelectVIEW_PICTURES",10,10) (public void run() {
           FilePicker filePicker = FilePicker.getInstance();
           filePicker.setListener(_listener);
           filePicker.setView(FilePicker.VIEW_PICTURES);
           System.out.println("Selection returned:"+ filePickez.show());
            )});
       menu.add(new MenuItem("Select VIEW_ALL", 11,10) {public void run() {
           FilePicker filePicker = FilePicker.getInstance();
           filePicker.setListener(_listener);
           filePicker.setView(FilePicker.VIEW_ALL);
           System.out.printIn("Selection returned: "+ filePicker.show());
            }));
       menu.add( new MenuItem("Select VIEW_MUSIC", 12, 10) {public void run() {
           FilePicker filePicker = FilePicker.getInstance();
           filePicker.setListener(_listener);
           filePicker.setView(FilePicker.VIEW_MUSIC);
           System.out.println("Selection returned: "+ filePicker.show());
            }});
       menu.add(new MenuItem("Select VIEW_RINGTONES", 12,10) {public void run() {
           FilePicker filePicker = FilePicker.getInstance();
           filePicker.setListener(_listener);
            filePicker.setView(FilePicker.VIEW_RINGTONES);
           System.out.printIn("Selection returned: "+ filePicker.show());
            })):
       menu.add(new MenuItem ("Select VIEW_VOICE_NOTES",13,10) {public void run() {
            FilePicker filePicker = FilePicker.getInstance();
            filePicker.setListener(_listener);
            filePicker.setView(FilePicker.VIEW_VOICE_NOTES);
           System.out.println("Selection returned:"+ filePicker.show());
            }});
       menu.add(new MenuItem("Select VIEW_VIDEOS", 14, 10) (public void run() {
            FilePicker filePicker = FilePicker.getInstance();
            filePicker.setTitle("Choose Video to Upload");
            filePicker.setListener(_listener);
            filePicker.setView(FilePicker.VIEW_VIDEOS);
            System.out.printIn("Selection returned: "+ filePicker.show());
            }});
       menu.add(new MenuItem("Select in /Device/documents/",15,10) (public void run() {
            FilePicker filePicker = FilePicker.getInstance();
            filePicker.setListener(_listener);
            filePicker.setView(FilePicker.VIEW_ALL);
            filePicker.setPath("file:///SDcard/Device/documents/")
            System.out.println("Selection returned:"+ filePicker.show());
            }});
       menu.addSeparator();
       super.makeMenu(menu, instance);
```

Further, it is appreciated that setView(int view) sets the view of the file selection dialog based on the currently supported Media application views.

It is yet further appreciated that: VIEW_ALL provides generic file selection dialog type (Files application view - like); VIEW_MUSIC provides a file selection dialog type for selecting music files (Music application - like); VIEW_PICTURES provides file selection dialog type for selecting pictures (Pictures application - like); VIEW_RINGTONES provides file selection dialog type for selecting ringtones (Ring Tones application - like); VIEW_VIDEOS provides file selection dialog type for selecting videos (Videos application - like); and VIEW_VOICE_NOTES provides file selection dialog type for selecting voice notes (Voice Notes application - like). It is further appreciated that setTitle(String title) sets the custom title of the file selection dialog, and overrides the default title of a media screen (such as "Select Picture").

Further filePicker.setView(FilePicker.VIEW_PICTURES) provides navigation to a Pictures application, such that while selecting a picture, an existing image can be either opened and viewed or a new image can be acquired (e.g. via camera device 127) for selection as in Figs. 4, and 7-9.

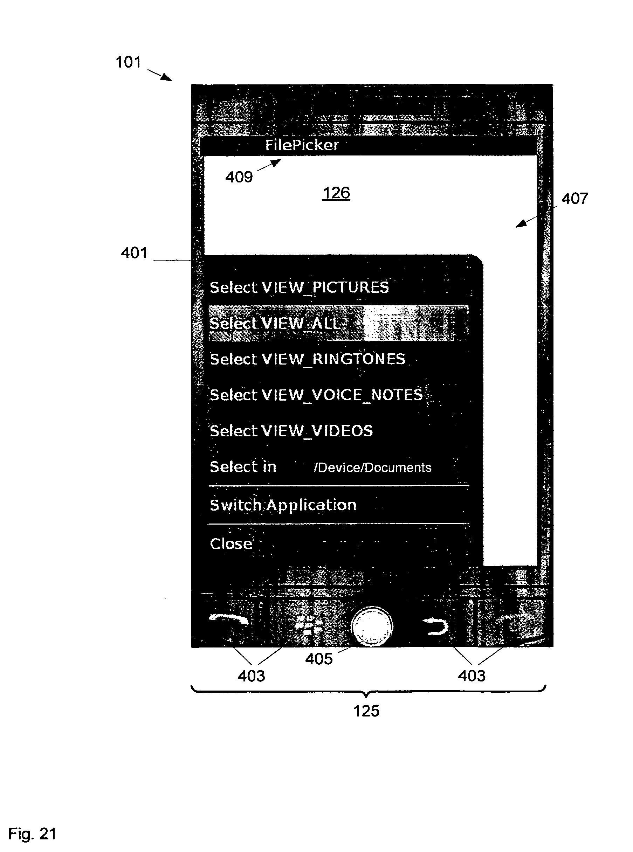

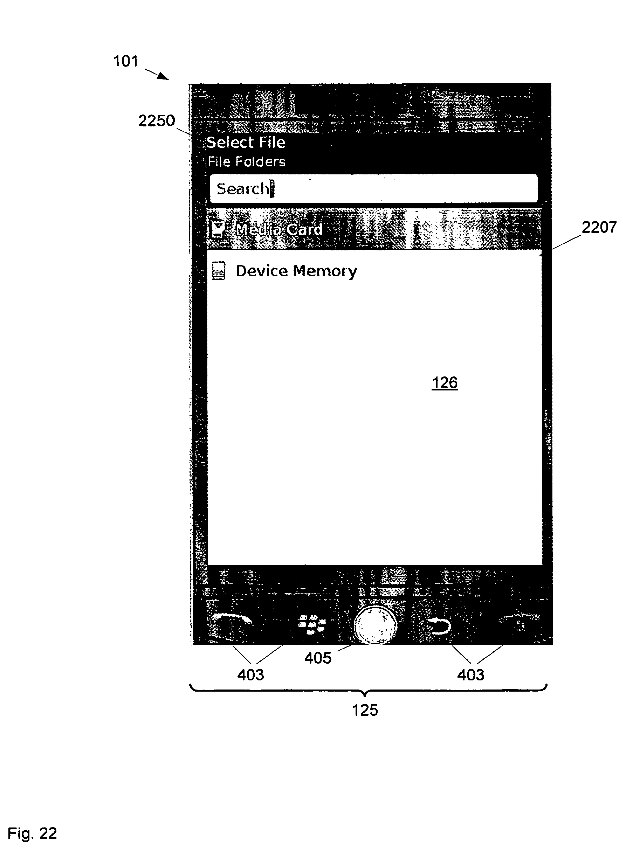

filePicker.setView(FilePicker.VIEW_ALL) provides navigation to a file explorer application to navigate to any desired folder to pick a file, for example, "Device/camera/3.JPG" in Figs. 21-23.

filePicker.setView(FilePicker.VIEW_MUSIC) provides navigation to a music application such that music files can be played prior to selection, as in Figs. 10-13.

filePicker.setView(FilePicker.VIEW_RINGTONES) provides navigation to a ringtones application such that ringtones can be played prior to selection, as in Figs. 14-15.

filePicker.setView(FilePicker.VIEW_PICTURES) provides navigation to a voice notes application such that voice notes can be played and/or generated prior to selection, as in Figs. 16-18.

filePicker.setView(FilePicker.VIEW_VIDEOS) provides navigation to a videos application such that videos can be played and/or generated prior to selection, as in Figs. 19-20. The filePicker.setTitle("Choose Video to Upload") can changes a default title in the videos application from "Select Video" to "Choose Video to Upload".

filePicker.setView(FilePicker.VIEW_ALL) provides navigation to a specified path, as set by filePicker.setPath("file:///SDCard/Device/documents/"), for selection of a file, as in Figs. 25-26.

In any event, a file can be selected in a first application using a native application launched from a provided list of file, such that the file to be selected can be played, viewed, processed, generated or the like in the native application prior to selection for the first application. Further, as the file for selection can be generated in the native application via a list of given file types (e.g. in file selection menu 401) launched from the first application, the file need not be generated prior to launching the first application or by leaving the first application which generally reduces the process flow in generating and selecting the file. Further, memory cache 227 can be used more efficiently and wear and tear on input device 125 is reduced.

Those skilled in the art will appreciate that in some implementations, the functionality of device 101 can be implemented using pre-programmed hardware or firmware elements (e.g., application specific integrated circuits (ASICs), electrically erasable programmable read-only memories (EEPROMs), etc.), or other related components. In other implementations, the functionality of device 101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the implementations, and that the above implementations and examples are only illustrations of one or more implementations. The scope, therefore, is only to be limited by the claims appended hereto.

## Claims

1. A method for designating a given file as selected for attachment to a message generated by a messaging application in a computing device (101), said computing device (101) comprising a processing unit (120) interconnected with a memory (124) for storing files, a display device (126) and an input device (125), said method implementable in said processing unit (120), said method comprising:
providing a list of file types at said display device (126) in response to receiving a first indication that a file is to be selected from said input device (125), said first indication received within said messaging application being processed by said processing unit (120);
launching a second application associated with a given file type in response to receiving a second indication that said given file type has been selected from said list, said second application for processing said given file type;
at least one of opening said given file in said second application and
generating said given file in said second application;
receiving, after the at least one of opening and generating, a third indication that said given file has been selected within said second application, thereby designating said given file as selected in said messaging application for attachment to said message; and
attaching said given file designated as selected to said message.

2. The method of claim 1, wherein launching said second application associated with said given file type comprises providing a list of files of said given file type.

3. The method of any of claims 1 to 2, wherein said list of file types is generated using an API (application programming interface).

4. The method of any of claims 1 to 3, wherein said third indication comprises at least one of:
first data indicating that said given file has been clicked on using said input device (125); and
second data indicating that a select file option has been selected within a menu in said second application, said menu provided at said display device (126), said select file option provided to indicate that said given file can be designated as selected in said messaging application.

5. The method of claim 4, further comprising modifying said menu in said second application to include said select file option.

6. The method of any of claims 1 to 5, further comprising changing a title of said second application displayed on said display device (126) from a second application title to a custom title.

7. The method of claim 6, wherein said custom title is indicative that said second application is being used to designate a file as selected.

8. The method of any of claims 1 to 7, wherein said given file type comprises at least one of a picture file type, a ringtone file type, a video file type, a voice note file type, a multimedia file type, a document file type and a spreadsheet file type and said second application comprises at least a respective one of a picture application, a ringtone application, a video application, a voice note application, a multimedia application, a document application and a spreadsheet application.

9. A computing device (101) for designating a given file as selected for attachement to a message generated by a messaging application in said computing device, said computing device (101) comprising:
a processing unit (120) interconnected with a memory (124) for storing files, a display device (126) and an input device (125), said processing unit (120) enabled to implement any of the steps of the method claims 1 to 8.

10. A computer program product, comprising a computer usable medium having
a computer readable program code adapted to be executed to implement any of the steps of the method of claims 1 to 8**.**

## Patentansprüche

1. Ein Verfahren zum Bestimmen einer gegebenen Datei als ausgewählt zum Anfügen an eine Nachricht, die von einer Nachrichtenanwendung in einer Computervorrichtung (101) erzeugt wird, wobei die Computervorrichtung (101) eine Verarbeitungseinheit (120) aufweist, die mit einem Speicher (124) zum Speichern von Dateien, einer Anzeigevorrichtung (126) und einer Eingabevorrichtung (125) verbunden ist, wobei das Verfahren in der Verarbeitungseinheit (120) implementiert werden kann, wobei das Verfahren aufweist:
Vorsehen einer Liste von Dateitypen an der Anzeigevorrichtung (126) in Reaktion auf ein Empfangen einer ersten Angabe, dass eine Datei auszuwählen ist, von der Eingabevorrichtung (125), wobei die erste Angabe in der Nachrichtenanwendung empfangen wird, die von der Verarbeitungseinheit (120) verarbeitet wird;
Starten einer zweiten Anwendung, die mit einem gegebenen Dateityp assoziiert ist, in Reaktion auf ein Empfangen einer zweiten Angabe, dass der gegebene Dateityp aus der Liste ausgewählt wurde, wobei die zweite Anwendung zur Verarbeitung des gegebenen Dateityps vorgesehen ist;
zumindest eines aus einem Öffnen der gegebenen Datei in der zweiten Anwendung und einem Erzeugen der gegebenen Datei in der zweiten Anwendung;
Empfangen, nach dem zumindest einen aus einem Öffnen und Erzeugen,
einer dritten Angabe, dass die gegebene Datei in der zweiten Anwendung ausgewählt wurde, dadurch Bestimmen der gegebenen Datei als ausgewählt zum Anfügen an die Nachricht in der Nachrichtenanwendung; und
Anfügen der gegebenen Datei, die als ausgewählt bestimmt ist, an die Nachricht.

2. Das Verfahren gemäß Anspruch 1, wobei das Starten der zweiten Anwendung, die mit dem gegebenen Dateityp assoziiert ist, ein Vorsehen einer Liste von Dateien des gegebenen Dateityps aufweist.

3. Das Verfahren gemäß einem der Ansprüche 1 bis 2, wobei die Liste von Dateitypen unter Verwendung einer API (Application Programming Interface) erzeugt wird.

4. Das Verfahren gemäß einem der Ansprüche 1 bis 3, wobei die dritte Angabe zumindest eines aufweist aus:
ersten Daten, die angeben, dass die gegebene Datei bei einer Verwendung der Eingabevorrichtung (125) angeklickt wurde; und
zweiten Daten, die angeben, dass eine "Datei auswählen"-Option in einem Menü in der zweiten Anwendung ausgewählt wurde, wobei das Menü auf der Anzeigevorrichtung.(126) vorgesehen ist, wobei die "Datei auswählen"-Option vorgesehen ist, um anzugeben, dass die gegebene Datei als ausgewählt in der Nachrichtenanwendung bestimmt werden kann.

5. Das Verfahren gemäß Anspruch 4, das weiter ein Modifizieren des Menüs in der zweiten Anwendung aufweist, um die "Datei auswählen"-Option zu umfassen.

6. Das Verfahren gemäß einem der Ansprüche 1 bis 5, das weiter ein Ändern eines Titels der zweiten Anwendung, die auf der Anzeigevorrichtung (126) angezeigt wird, von einem zweiten Anwendungstitel zu einem benutzerdefinierten Titel aufweist.

7. Das Verfahren gemäß Anspruch 6, wobei der benutzerdefinierte Titel angibt, dass die zweite Anwendung verwendet wird, um eine Datei als ausgewählt zu bestimmen.

8. Das Verfahren gemäß einem der Ansprüche 1 bis 7, wobei der gegebene Dateityp zumindest eines aus einem Bild-Dateityp, Klingelton-Dateityp, Video-Dateityp, Sprachnotiz-Dateityp, Multimedia-Dateityp, Dokument-Dateityp und Tabellen-Dateityp aufweist und die zweite Anwendung zumindest eine jeweilige einer Bild-Anwendung, Klingelton-Anwendung, Video-Anwendung, Sprachnotiz-Anwendung, Multimedia-Anwendung, Dokument-Anwendung und Tabellen-Anwendung aufweist.

9. Eine Computervorrichtung (101) zum Bestimmen einer gegebenen Datei als ausgewählt zum Anfügen an eine Nachricht, die von einer Nachrichtenanwendung in der Computervorrichtung erzeugt wird, wobei die Computervorrichtung (101) aufweist:
eine Verarbeitungseinheit (120), die mit einem Speicher (124) zum Speichern von Dateien, einer Anzeigevorrichtung (126) und einer Eingabevorrichtung (125) verbunden ist, wobei die Verarbeitungseinheit (120) fähig ist zum Implementieren der Schritte der Verfahrensansprüche 1 bis 8.

10. Ein Computerprogrammprodukt, das ein computerverwendbares Medium aufweist mit einem computerlesbaren Programmcode, der ausgebildet ist, ausgeführt zu werden zum Implementieren der Schritte des Verfahrens der Ansprüche 1 bis 8.

## Revendications

1. Procédé pour désigner un fichier donné comme étant sélectionné pour être joint à un message généré par une application de messagerie dans un dispositif informatique (101), ledit dispositif informatique (101) comprenant une unité de traitement (120) interconnectée avec une mémoire (124) pour mémoriser des fichiers, un dispositif d'affichage (126) et un dispositif d'entrée (125), ledit procédé pouvant être mis en oeuvre dans ladite unité de traitement (120), ledit procédé comprenant :
la fourniture d'une liste de types de fichiers au niveau dudit dispositif d'affichage (126) en réponse à la réception d'une première indication qu'un fichier doit être sélectionné à partir dudit dispositif d'entrée (125), ladite première indication reçue dans ladite application de messagerie étant traitée par ladite unité de traitement (120) ;
le lancement d'une deuxième application associée à un type de fichier donné en réponse à la réception d'une deuxième indication que ledit type de fichier donné a été sélectionné dans ladite liste, ladite deuxième application servant à traiter ledit type de fichier donné ;
au moins l'une de l'ouverture dudit fichier donné dans ladite deuxième application et de la génération dudit fichier donné dans ladite deuxième application ;
la réception, après au moins l'une de l'ouverture et de la génération, d'une troisième indication que ledit fichier donné a été sélectionné dans ladite deuxième application, désignant de ce fait ledit fichier donné comme étant sélectionné dans ladite application de messagerie pour être joint au dit message ; et
l'ajout dudit fichier donné désigné comme étant sélectionné au dit message.

2. Procédé selon la revendication 1, dans lequel le lancement de ladite deuxième application associée audit type de fichier donné comprend la fourniture d'une liste de fichiers dudit type de fichier donné.

3. Procédé selon l'une quelconque des revendications 1 et 2, dans lequel ladite liste de types de fichiers est générée en utilisant une API (interface de programmation d'application).

4. Procédé selon l'une quelconque des revendications 1 à 3, dans lequel ladite troisième indication comprend au moins l'une :
de premières données indiquant qu'un clic a été effectué sur ledit fichier donné en utilisant ledit dispositif d'entrée (125) ; et
de deuxièmes données indiquant qu'une option de sélection de fichier a été sélectionnée dans un menu dans ladite deuxième application, ledit menu étant fourni au niveau dudit dispositif d'affichage (126), ladite option de sélection de fichier étant fournie pour indiquer que ledit fichier donné peut être désigné comme étant sélectionné dans ladite application de messagerie.

5. Procédé selon la revendication 4, comprenant en outre la modification dudit menu dans ladite deuxième application pour inclure ladite option de sélection de fichier.

6. Procédé selon l'une quelconque des revendications 1 à 5, comprenant en outre la modification d'un titre de ladite deuxième application affiché sur ledit dispositif d'affichage (126) d'un deuxième titre d'application en un titre personnalisé.

7. Procédé selon la revendication 6, dans lequel ledit titre personnalisé est indicatif du fait que ladite deuxième application est utilisée pour désigner un fichier comme étant sélectionné.

8. Procédé selon l'une quelconque des revendications 1 à 7, dans lequel ledit type de fichier donné comprend au moins l'un d'un type de fichier d'image, d'un type de fichier de sonnerie, d'un type de fichier vidéo, d'un type de fichier de note vocale, d'un type de fichier multimédia, d'un type de fichier de document et d'un type de fichier de tableur, et ladite deuxième application comprend au moins une application respective parmi une application d'image, une application de sonnerie, une application vidéo, une application de note vocale, une application multimédia, une application de document et une application de tableur.

9. Dispositif informatique (101) pour désigner un fichier donné comme étant sélectionné pour être joint à un message généré par une application de messagerie dans ledit dispositif informatique, ledit dispositif informatique (101) comprenant :
une unité de traitement (120) interconnectée avec une mémoire (124) pour mémoriser des fichiers, un dispositif d'affichage (126) et un dispositif d'entrée (125), ladite unité de traitement (120) étant autorisée à effectuer l'une quelconque des étapes des revendications de procédé 1 à 8.

10. Produit-programme d'ordinateur, comprenant un support utilisable par un ordinateur comportant un code de programme pouvant être lu par un ordinateur conçu pour être exécuté pour effectuer l'une quelconque des étapes du procédé des revendications 1 à 8.
